# EUROPÄISCHE PATENTANMELDUNG

(11) **EP 2 228 608 A2**
(43) Veröffentlichungstag der Anmeldung: **15.09.2010**
(21) Anmeldenummer: 09175807.8
(22) Anmeldetag: 12.11.2009
(51) Int. Cl.: F24F 11/00

(54) **Präsenzmelder für Wohneinheiten**

(30) Priorität: 12.11.2008 DE 202008015014 U; 13.11.2008 DE 202008015069 U
(71) Anmelder: Aizo AG, 35578 Wetzlar (DE)
(72) Erfinder: Beck, Wilfried, 65191 Wiesbaden (DE)

(57) **Zusammenfassung**

Präsenzmeider für Wohneinheiten, umfassend mindestens einen mobiler Sender, wobei der Sender Fernkommunikationsmittel umfaßt, mindestens einen Empfänger, wobei der Empfänger in der Wohneinheit verortet ist, und wobei der Empfänger geeignet ist, die Fernkommunikationsmittel des Senders zu empfangen, einen Speicher, in welchem Betriebszustände, von in einer Wohneinheit befindlichen elektrischen Verbrauchern, ablegbar sind, wobei der Sender mit Hilfe seiner Fernkommunikationsmittel mit dem Empfänger automatisiert in Kontakt zu treten in der Lage ist, und diese im Speicher hinterlegten Betricbszustände für die betreffende Wohneinheit automatisiert abzurufen in der Lage ist, wodurch sich durch dieses Abrufen der Zustand von in der Wohneinheit verorteten Stromvcrbrauchern auf Basis der im Speicher hinterlegten automatisiert Daten ändert.

## Beschreibung

Die Erfindung betrifft einen Präsenzmelder für Wohneinheiten.

In der Haustechnik besteht das Bedürfnis die Eigenschaften von Wohnräumen an die Bedürfnisse ihrer Bewohner anzupassen.

Der Stand der Technik lehrt Präsenzmelder, welche in einem Gebäuderaum fixiert sind und einen elektrischen Verbraucher bei Eintritt einer Person an bzw. ausschalten, wobei diese weder in der Lage sind die unterschiedlichen ein- bzw. austretenden Personen zu unterscheiden, noch in der Lage sind, die an sie angeschlossenen Verbraucher in einen anderen Zustand zu versetzen, als sie an- bzw. auszuschalten.

Der Stand der Technik lehrt in der DE 20 2008 005338.2 ein Ortungssystem für Einrichtungsgegenstände, gemäß dessen ein Ortungssignalgeber und ein Ortungssignalempfänger derart zusammenwirken, daß durch dieses Zusammenwirken die räumliche Position des Einrichtungsgegenstands im Gebäude identifizierbar ist.

In der US 2003/0149576 wird ein Smartcard-System für Hotelbetriebe gelehrt, bei welcher der Hotelgast einen vordefinierten Betriebszustände auf einer Smartcard erhält, welcher bei Einsatz der Karte den Zutritt in das Hotel und das Zimmer unter Umgehung der Rezeption ermöglicht und im Zimmer einen Betriebszustand einrichtet.

In der US 2008/003 4766 wird eine Klimaanlagensteuerung gelehrt, bei welcher der Bediener diverse Betriebszustände auf ein Sendegerät lädt, und mit ihrer Hilfe dann die Klimaanlage entsprechend diesen Vorgaben steuert.

Es ist vor diesem Hintergrund Aufgabe der vorliegenden Erfindung eine Möglichkeit bereitzustellen wie sich Wohnumgebungen an ihre individuellen Bewohner komfortabel anpassen können.

Diese Aufgabe wird durch die Merkmale der unabhängigen Ansprüche gelöst; vorteilhafte Ausgestaltungen ergeben sich aus den Unteransprüchen.

Insbesondere wird die Aufgabe gelöst durch einen Präsenzmelder für Wohneinheiten, umfassend mindestens einen Sender, wobei der Sender Fernkommunikationsmittel umfaßt, mindestens einen Empfänger, wobei der Empfänger in der Wohneinheit verortet ist, und wobei der Empfänger geeignet ist, die Fernkommunikationsmittel des Senders zu empfangen, einen Speicher, in welchem Betriebszustände, von in einer Wohneinheit befindlichen elektrischen Verbrauchern, ablegbar sind, wobei der Sender mit Hilfe seiner Fernkommunikationsmittel mit dem Empfänger automatisiert in Kontakt zu treten in der Lage ist, und diese im Speicher hinterlegten Betriebszustände für die betreffende Wohneinheit automatisiert abzurufen in der Lage ist, wodurch sich durch dieses Abrufen der Zustand von in der Wohneinheit verorteten Stromverhrauchern auf Basis der im Speicher hinterlegten automatisiert Daten ändert.

Der Sender, der vorzugsweise mobil ist und Fernkommunikationsmittel umfasst bewirkt zweierlei: Einmal kann ein derartiger insbesondere mobiler Sender bei seinem Besitzer verbleiben und ist daher geeignet den Besitzer anzukündigen und zu identifizieren, bzw. konkreter dessen bevorzugte in der Wohnung einzustellende Wohnumgebung anzukündigen und einzuleiten, so diese in einem Speicher hinterlegt sind. Zum zweiten kündigt sich der Sender mit Hilfe seines Fernkommunikationsmittels bereits aus einer Ferne an und nicht erst, wenn er z.B. unmittelbar in eine Wohneinheit, oder eine Unterwohneinheit, wie z.B. einen Raum eintritt, wie es beispielsweise bei IR-gesteuerten stationär befestigten Präsenzmeldern der Fall ist.

Der mindestens eine Empfänger, wobei der Empfänger in der Wohneinheit verortet ist, und wobei der Empfänger geeignet ist, die Fernkommumkationsmittel des Senders zu empfangen bewirkt, daß der Sender mit Hilfe seiner Fernkommunikationsmittel einen Kommunikationspartner vor Ort hat. Dies hat den Vorteil, daß dieser Empfänger in der Wohneinheit fest verbaut werden kann und sogar im vorliegenden Fall nicht sichtbar verbaut werden kann, was insbesondere bei denkmalgeschützten Gebäuden bzw. ästhetisch anspruchsvollen Gestaltungen vorteilhaft ist. Vorteilhafterweise wird die Kommunikation zwischen Sender und Empfänger mit Hilfe des Einsatzes einer Verschlüsselungstechnik geschützt, sodaß sichergestellt ist, daß diese Kommunikation und ihre Inhalte unter der vollen Kontrolle des Eigentümers des Senders und/oder Empfängers bleibt.

Der mindestens eine Speicher, in welchem Betriebszustände, von in einer Wohneinheit befindlichen elektrischen Verbrauchern, ablegbar sind, bewirkt, daß in der Wohneinheit selbst Daten, insbesondere derartige Zustandsdaten / Betriebsdaten von Verbrauchern hinterlegbar sind.

Dieser Speicher kann sowohl unmittelbar an den Sender angekoppelt sein, als auch von diesem entfernt verortet sein. Zwar könnte dieser Speicher auch in eigenen Transpondern in den jeweiligen Wohnräumen verteilt werden, wobei in jedem dieser Transponder die bevorzugten Zustände einzelner Bewohner abgelegt sind, die bei Eintritt dieser Bewohner abgerufen und realisiert werden, wobei diese Speicher/Transponder auch am Empfänger fixiert sein können. Vorteilhafter ist es jedoch all diese Informationen in möglichst einem einzigen zentralen Speicher pro Wohneinheit zu hinterlegen, der mit den Empfängern derart verknüpft ist, daß Speicher und Empfänger, sowie Speicher und elektrische Verbraucher ihre Daten austauschen können. Besonders vorteilhaft ist es, wenn dieser Datenaustausch zwischen Speicher und Empfänger über drahtlose Fernkommunikationsmittel, wie IR, Bluetooth, Funk, WLAN, Bussysteme erfolgt. Im Fall daß auf eine reduzierte Strahlung Wert gelegt wird, kommen auch drahtgebundene Fernkommunikationsmittel in Frage, wie z.B. Bußsysteme oder auch das Cebäudestromnetz, wobei im Gebäudestromnetz die Daten entweder mit Hilfe der bekannten Power-Line-Techniken, also unter Verwendung von HF, verbreitet werden können, oder mit Hilfe einerWirkleistungsmodulation, also unter Vermeidung von HF, wie z.B. in der WO06034866A bzw, in der EP 1 675 274 beschrieben.

Im vorliegenden Präsenzmelder für Wohneinheiten können, im Fall, daß ein zentraler Speicher existiert somit eine Vielzahl von Sendern z.B. mit Hilfe einer vom Speicher wiedererkennbaren ID-Nummern (Identifikationsnummer) des Senders hinterlegt werden, wodurch diese Sender dann wieder erkannt werden, wenn diese in den Empfangsbereich des Empfängers gelangen sollten und wodurch die Person, die diesen Sender beispielsweise mit sich führt selbst anonym bleiben kann. Darüber hinaus können in diesem Speicher für einen jeden elektrischen Verbraucher und für jede Wohneinheit für und für jeden Raum in dieser Wohneinheit individuelle Soll-Betriebszustände und/oder individuelle Ruhe-Betnebszustände und/oder Übergangs- Betriebszustände abhängig von der Sender-ID und/oder abhängig von der Uhrzeit und/oder abhängig von der Jahreszeit bzw. und/oder abhängig von individuellen Wünschen von Personen bzw. abhängig von weiteren Parametern hinterlegt werden. Hierbei sind individuelle Soll-Betriebszustände solche Zustände, die zu realisieren sind, wenn der individuelle Sender je nach Voreinstellung sich der Wohneinheit nähert bzw. diese betritt.

Hierbei können individuelle Übergangs-Betriebszustände solche Zustände sein, die herrschen sollen, wenn erwartet werden kann, daß Dritte diese Wohneinheit auch nutzen und daß diese die Wohneinheit nicht in einem Ruhezustand vorfinden wollen, wie beispielsweise die Küche um die Frühstücks- Mittagsessens- oder Abendessenszeit, oder das Bad zur Aufstehenszeit. Weiterhin können individuelle Ruhe-Betriebszustände solche Zustände sein, die herrschen sollen, wenn der individuelle Sender die Wohneinheit endgültig verlässt, wie z.B. das Abschalten des Stand-By-Betriebs und/oder das Herunterfahren der Heizung und/oder das Schließen von Rollläden und/oder das Einschalten der Alarmanlage. Hierdurch unterscheidet sich dieser Präsenzmelder für Wohneinheiten von den gängigen Konzepten dadurch, daß ein Bediener keinerlei Start-Handlungen durchführen muß, um diese Prozesse einzuleiten oder zu beenden, vielmehr geschehen sie automatisch mit (einstellbar abstandmäßig vordefinierter) Näherung des Senders, bzw. der Person mit dem Sender bzw. bei Eintritt des Senders in den Empfängerbereich.

Der Umstand, daß dies "automatisiert" erfolgt, bewirkt, daß die Person, welche den Sender bei sich hat, keinerlei Handgriffe mehr durchrühren muß, um den Zielzustand der Umgebung herzustellen. Vielmehr wird dieser Zustand selbsttätig hergestellt und der Herstellprozess beginnt mit dem Eintritt des Senders in den Empfangsbereich des Empfängers. Hierdurch setze es sich von gewöhnlichen Fernbedienungen ab und auch von Steuerungssystemen, welche z.B. auf einen Laptop ladbar sind, weil erstens der Zustand automatisch erreicht wird und zweitens das Fernkommunikationsmittel als Auslösemedium genutzt wird, um einen Zustand einzuleiten. Auslöser ist somit nicht mehr der Mensch / Bediener / Inhaber eines Mediums, sondern das Medium selbst.

Zum Steuern kommen in erster Linie Licht, Heizung, Küchengeräte, Jalousien, Unterhaltungselektronik, Haushaltsgeräte, Sicherheitssysteme, Zugangssysteme u.ä. in Frage

Wenn der Sender mit Hilfe seiner Fernkommunikationsmittel mit dem Empfänger in Kontakt zu treten in der Lage ist, und diese im Speicher hinterlegten Betriebszustände für die betreffende Wohneinheit abzurufen in der Lage ist, wodurch sich durch dieses Abrufen der Zustand von in der Wohneinheit verorteten Stromverbrauchern auf Basis der im Speicher hinterlegten Daten ändert, bewirkt dies, daß wenn ein Sender bzw. konkreter eine Person mit einem solchen Sender in diesen Empfangsbereich eines Empfängers kommt, aus diesem Speicher die zum jeweiligen Sender gehörigen jeweiligen Betriebszustände von elektrischen Verbrauchern in den jeweiligen vordefinierten Wohnbereich abgerufen werden und daß mit deren Hilfe der Ist-Zustand dieser Verbraucher an diesen im Speicher befindlichen vordefinierten Soll-Zustand angepasst wird. Umfaßt ein Wohnbereich mehrere Räume, so wird in jedem Raum auf Basis der hinterlegten Daten der Ist-Zustand an den vordefinierten Soll-Zustand angenähert. Dies muß nicht überall gleichzeitig geschehen, sondern kann derart im Speicher hinterlegt werden, daß die jeweiligen individuellen Räume und/oder die die jeweiligen individuellen Raunbereiche, denen sich der Sender nähert, bzw. die dieser durchwandert sequentiell vom Ist-Zustand in den Soll-Zustand und dann wiederum entweder in den Übergangs-Betriebszustand oder in den Ruhe-Zustand versetzt werden. So kann beispielsweise bei einem nächtlichen Gang vom Schlafzimmer an den Kühlschrank beim Übertritt vom Schlafzimmer in den Gang das Ganglicht, der Uhrzeit wegen, in gedimmtem Zustand angeschalten und beim Übertritt vom Gang in die Küche gleich wieder ausgeschalten werden und zugleich das Küchenlicht ganz angeschalten werden.

Auf vergleichbare Weise können alle elektrischen Verbraucher nur dadurch, daß die jeweilige Wohneinheit durch den Sender durchwandert wird selbsttätig, also ohne physische Aktivierung durch eine Person an einem Schaltgerät in ihren vordefinierten und angestrebten Soll-Zustand versetzt werden, beispielsweise können auf diese Weise im Winter ab Sonnenaufgang per Durchwandern der Räume automatisch alle Fensterläden / Rollläden geöffnet werden, was den Vorteil hat, daß sich dieses Öffnen unabhängig von einer fest programmierten Zeit vollzieht, die im Winter wegen des späten Sonnenaufgangs zwar passend ist, aber im Sommer wegen des früheren Sonnenaufgangs als zu spät erscheint.

Ein diese Merkmale umfassender erfindungsgemäßer Präsenzmelder für Wohneinheiten bewirkt somit, daß der für eine Person angenehmste Wohnraumzustand mit dieser Person, bzw. konkreter mit ihrem Sender durch die Räume der Wohneinheit mitwandert, was einen Zugewinn an Wohnkomfort bewirkt.

Ein diese Merkmale umfassende Präsenzmelder für Wohneinheiten bewirkt außerdem, daß bei Verlassen eines Wohnraums dieser automatisch in einen energiesparenden Zustand versetzt werden kann, was einen zusätzlichen ökonomischen Vorteil durch reduzierte Energiekosten bewirkt.

Eine Ausführungsform, wobei das Fernkommunikationsmittel WLAN ist, bewirkt, daß ein bereits verbreiteter und bewährter Standard eingesetzt genutzt werden kann. Insbesondere kann auf die bei WLAN bewährten Verschlüsselungen zurückgegriffenwerden, was Vorteile für den Schutz der Privatsphäre des Eigentümers des Senders bzw. Empfängers mit sich bringt. Alternativ können auch andere Fernkommunikationsmittel, wie z.B. Bluetooth, IR o.ä. bzw. eine Kombination von ihnen genutzt werden. Die einzelnen Fernkommunikationsmittel können hierbei in einem einzelnen Sender verortet sein und, beispielsweise mit Unterstützung von GPS bzw. einem vergleichbar wirkenden Navigationssystem immer dann (de)aktiviert werden, wenn ihre besonderen Eigenschaften genutzt werden sollen. So wäre beispielsweise auf einer Etage mit Rigipswänden ein WLANfähiges Gerät möglicherweise zu stark und zu weit sendend und es könnte daher das WLAN aus- und IR angeschalten werden. Wobei in diesem Fall natürlich auch die entsprechenden Empfänger zum Empfang der alternativen Fernkommunikationsmittel aktivierbar sein müssen.

Eine Ausführungsform, wobei der Sender, welcher das Fernkommunikationsmittel umfasst, ein WLANfähiges Gerät ist, bewirkt, daß auf bereits im Handel verfügbare und bewährte Geräte als Sender zurückgegriffen werden kann.

Eine Ausführungsform, wobei das WLANfähige Gerät ist Mobiltelephon und/oder ein Laptop, und/oder ein PDA ist, bewirkt, daß auf Geräte als Sender zurückgegriffen werden kann, welche fast ein jeder Hausbewohner bereits besitzt. Im Vergleich zu RFID oder eigenen Chips, welche ein Bediener mit sich führen müsste hat dies den Vorteil, daß in diesem Fall kein weiteres Zusatzgerät anfällt und daß umgekehrt auch diese Alltagsgeräte schwerer verloren gehen können. Umgekehrt wirt das erfindungsgemäße System außerdem auch als Detektor für ein verloren gegangenes Sendegerät (z.B. Mobiltelephon), denn ein erfindungsgemäß als Sender wirkendes Mobiltelephon ist ganz einfach in jenem Raum wieder aufzufinden, in welchem der Zustand herrscht, der für die ID, welche das Mobiltelephon aussendet vordefiniert wurde. Man erkennt also am Raumzustand, wo sich dieses Gerät befinden muß.

Eine Ausführungsform, wobei in dem Speicher für jeden Sender individuelle Daten hinterlegbar sind, welche den Anwesenheits-Zustand, den Übergangs-Zustand, den Ruhe-Zustand, der in einer Wohneinheit befindlichen elektrischen Verbraucher repräsentieren, bewirkt, daß unterschieden werden kann, ob sich nur eine Person oder mehrere Personen in einem Haus aufhalten. So kann im Speicher hinterlegt werden, daß wenn sich mehr als ein einziger Sender in der Nähe befinden, die jeweiligen Räume in einem bestimmten Zeitkorridor (z.B. Wohnzimmer und Küche zwischen 17 Uhr und 20 Uhr) nicht in den Ruhezustand versetzt werden, sondern in den Übergangs-Zustand, da erfahrungsgemäß jene Räume zu jenen Zeiten stark frequentiert sind und niemand bei mehrmaligem Eintritt in die Küche in einen verdunkelten Raum eintreten möchte.

Eine Ausführungsform, wobei bei Durchwandern der Wohneinheit in der Wohneinheit verortete Stromverbraucher in ihrem Betriebszustand verändert werden bewirkt, daß wenn ein Sender mehrere Wohneinheiten bzw. Untereinheiten, wie Etagen oder innerhalb der Etagen Räume durchwandert, bei diesem Durchwandern sequentiell der hinterlegte Soll-Zustand angestrebt wird. Hierbei bedeutet daß der Zustand im einzutretenden Bereich sich in den Soll-Zustand ändert und bei Austritt aus diesem Bereich dieser Soll-Zustand wieder aufgelöst wird und ein anderer Zustand, wie z.B. der Ruhe-Zustand eingenommen wird.
Eine Ausführungsform, wobei der zu schaltende Stromverbraucher bei Zutritt in die jeweilige Wohneinheit angeschalten und / oder in seinem bereits bestehenden Zustand geändert wird, bewirkt, entsprechend daß wenn ein Sender in Wohneinheiten bzw. Räume eintritt dort der im Speicher hinterlegte Wunschzustand der anzusprechenden elektrischen Verbraucher eingerichtet wird, indem die dort befindlichen und angesprochenen elektrischen Verbraucher (z.B. Lampen bzw. die Heizung) eingeschalten bzw. in ihrem möglicherweise bereits eingeschalteten und bestehenden Zustand auf vordefinierte Weise geändert werden, daß also z.B. eine bereits angeschaltene Lichtquelle bzw. Heizungssteuerung in ihrer Intensität (Lichtstärke bzw. Raumtemperatur) der Hinterlegung folgend erhöht werden. Bildlich gesprochen wandert dann beispielsweise bei Durchwandern einer Etage das Licht mit der laufenden Person mit, geht im einzutretenden Raum an und bei Verlassen wieder aus.
Eine Ausführungsform, wobei der zu schaltende Stromverbraucher bei Austritt aus der jeweiligen Wohneinheit ausgeschalten und / oder in seinem bereits bestehenden Zustand geändert wird, bewirkt, daß wenn ein Sender aus Wohneinheiten bzw. Räumen austritt dann dort der im Speicher hinterlegte Wunschzustand eingerichtet wird, indem die einen dort befindlichen und angesprochenen Verbraucher (z.B. Lampen bzw. die Heizung) ausgeschalten bzw. in ihrem möglicherweise bereits bestehenden Zustand auf vordefinierte Weise geändert werden, daß also z.B. eine Lichtquelle bzw. Heizungssteuerung in ihrer Intensität (Lichtstärke bzw. Raumtemperatur) der Hinterlegung folgend reduziert werden oder ganz ausgeschalten werden.

In all diesen Fällen kann dieser zu erreichende Soll-Zustand von zusätzlichen Parametern abhängig gemacht werden, wie z.B. einem Temperaturkorridor, der Jahres- bzw. Uhrzeit, oder auch dem Alter der Senderinhaber, da ja ältere Personen andere Beschallungs- bzw. Beleuchtungszustände schätzen, als jüngere.

So kann beispielsweise bei Ankunft das Garagentor automatisch, also ohne Betätigung eines Knopfs geöffnet werden und das Licht in der Garage angeschalten werden, welches sich bei Verlassen der Garage wieder automatisch abschaltet während zeitgleich die Gehwegbeleuchtung von der Garage zur Haustüre angeschalten wird und bei Erreichen der Haustüre diese, so sie elektrisch betätigt ist, automatisch öffnet und, wenn man als erster nach Hause kommt, das Ganglicht angeschalten wird und bei Betreten des Gangs die Haustüre geschlossen wird, während bereits vor Eintreffen aufgrund des Signals des Senders die Heizung in den vordefinierten Räumen beginnt die Raumtemperatur dem eingestellten SollWert anzunähern.

Eine Ausführungsform, wobei die Wohneinheit ein einzelner Wohnraum ist, ermöglicht die beschriebenen Vorgänge für kleinere Wohneinheiten, also für jede Etage, oder in einer Etage in jeden Raum individuell stattfinden zu lassen.

Eine Ausführungsform, wobei eine jede Gebäudeuntereinheit (wie z.B. Etage) oder jeder Gebäuderaum einen eigenen Empfänger aufweist bewirkt, daß die Empfangssignale präziser identifiziert werden können. Natürlich kann auch eine jeder Raum einen entsprechenden Empfänger ausweisen.

Eine Ausführungsform, wobei die Daten zwischen Speicher und elektrischem Verbraucher über das Hausstromnetz übertragen werden hat den Vorteil, daß sich die Fernkommunikationsmittd mit welchen der Sender mit den Empfängern kommuniziert und andere Fernkommunikationsmittel, mit welchen die elektrischen Verbraucher an den im Speicher hinterlegten Zustand angepasst werden, nicht untereinander stören. Ergänzend kann auch die Übertragung der Daten zwischen Speicher und Empfänger über das Hausstromnetz. erfolgen. Die Übertragung über das Hausstromnetz wiederum kann insbesondere auf die in der in der WO06034866A bzw. in der EP 1 675 274 vorgestellte Weise erfolgen.

Eine Ausführungsform, wobei im Fall, daß mehr als ein Sender in der Reichweite des Empfängers ist, bei sich widersprechenden anzustrebenden individuellen Zuständen von elektrischen Verbrauchern ein konsensualer Zustand hergestellt wird, bewirkt, daß nicht der durch einen ersten Sender angestrebte erste Zustand den durch einen weiteren Sender angestrebten weiteren Zustand dominiert. Wenn also beispielsweise für Sender 1 hinterlegt ist, daß bei Verlassen ab 22 Uhr die Heizung um 5 Grad heruntergefahren wird, für Sender 2 aber daß sie bis 23Uhr auf dem eingestellten Niveau bleibt, so kann für den Fall eines solchen Widerspruchs eine Konfilktlösung vorgegeben werden. Diese Konfliktlösung kann lauten: "Sender 1 dominiert", oder "Sender 2 dominiert", oder "es wird ein Zwischenzustand aus den Zuständen von Sender 1 und Sender 2 realisiert, wobei ein definierbarer Betrag der Differenzwerte (z.B. 50%) realisiert wird".

Eine Ausführungsform, wobei mindestens zwei Sender je mindestens einen Ortungssignalgeher umfassen, wobei der Ortungssignalgeber in der Lage ist, mindestens ein Ortungssignal abzugeben und/oder wobei der Sender mindestens einen Ortungssignalempfänger umfasst, wobei der Ortungssignalempfänger in der Lage ist, mindestens eines dieser Ortungssignale entgegenzunehmen, und einer der Sender im Speicher bekannt ist, der andere aber nicht, und wobei Ortungssignalgeber und Ortungssignalempfänger derart zusammenwirken, daß der im Speicher bekannte Sender dem im Speicher nicht bekannten Sender den Zutritt zum Speicher eröffnet, bewirkt, daß der zweite Sender mit Hilfe des ersten Senders Aufnahme findet in die Gemeinschaft der erlaubten Sender, für welche dann außerdem im Speicher auch Verhaltensmuster für elektrische Verbraucher hinterlegt sind.
Natürlich ist zu vermeiden, daß wenn beliebige Personen in den Empfangsbereich eines erfindungsgemäßen Ortungssystems gelangen, diese die getroffenen Einstellungen stören, oder die hinterlegten Wirkungen auslösen. Sender müssen daher autorisiert sein. Dies kann mit Verwendung einer ID-Nummer und einem "Ortungssignal" geschehen.

"Ortungssignal" ist hierbei in einer ersten Alternative lediglich ein vom Fernkommunikationssignal des Senders unterschiedliches Signal, beispielsweise ein anderes Signal mit welchem zwei Mobiltelephone miteinander in Kontakt ZU treten in der Lage sind. Will nun ein autorisierter Sender (z.B. Mobiltelephon 1) einen nicht autorisierten Sender (Mobiltelephon 2) den Zutritt ermöglichen, so treten Mobiltelephon 1 mit Mobiltelephon 2 über ihre "Ortungssignale" miteinander in Kontakt und Mobiltelephon 1, bezieht beim Eintritt in den Empfangsbereich aus dem Speicher eine ID-Nummer für das nicht autorisierte Gerät (Mobiltelephon 2) und leitet diese über das Ortungssignal an das nicht autorisierte Gerät weiter, wodurch es autorisiert wird und ab dann unter der neuen ID im Speicher erkannt wird und dann prinzipiell beim erfindnngsgernäßen Wirkungen auslösen kann. Hierbei kann es entweder die ein im Speicher für eine ID hinterlegtes Profil übernehmen (z.B. das für Kinder mit Fernsehverbot ab 20 Uhr, wodurch bei deren Eintritt in das Kinderzimmer der dortige Fernseher deaktiviert wird), oder es kann ein komplett neues Profil für die neue ID im Speicher hinterlegt werden.
Ein alternativer, zweiter Ansatz wäre: Wenn der zweite Sender im Speicher unbekannt ist, sich aber dennoch mit Hilfe einer ID, die er vorher z.B, vom Hausherren erhalten hat und in das z.B. Mobiltelephon eingegeben hat als Sender zu erkennen gibt, wirkt diese ID als Ortungssignal. Dieses Ortungssignal wird vom Empfänger erkannt, aber als unbekannt abgewiesen. Hierüber wird einer voreingestellten oder der lokal am nächsten befindlichen ID, bzw. konkreter dem zugehörigen Sender eine Nachricht übermittelt. Diese Nachricht kann mit einer Liste auswählbarer Zugangsstati verknüpft sein. Wenn nun der Sender mit der bekannten ID die fremde ID akzeptiert und eines der in der Liste vorgeschlagenen Zugangsstati auswählt, wird von diesem Zeitpunkt an auch dem zweiten Sender bzw. dessen zweiter ID Zugang zum Speicher gewährt und zwar im Umfang des ausgewählten Status.

Eine Ausführungsform, wobei der Sender ein Navigationssystem umfasst, bewirkt, daß Zustände schon im Voraus einleitbar sind. So ist hierdurch beispielsweise die Heizung bereits eine halbe Stunde vor Ankunft aktivierbar, wenn der Sender eine vordefinierte Entfernung unterschreitet. Umfasst der Sender ein Navigationssystem z.B. in Gestalt eines GPS-Systems, so weiß der Sender immer wie groß die Entfernung zum Zielort ist. Wird durch den Sender ein vordefinerter Abstand zum Zielort unterschritten, der die Reichweite des Fernkommunikationsmittels überschreitet, wie z.B. 10 Km für die Heizung, 500 Meter bebautes Gebiet für das Garagentor und 100 Meter bebautes Gebiet für die Außenbeleuchtung, und ist der Sender (z.B. das Mobiltelephon) in der Lage eine Nachricht (z.B. eine SMS) automatisiert abzusetzen und ist der Empfänger in der Lage, diese Nachricht mit Hilfe einer Empfangseinheit zu empfangen (z.B. eine SMS) und zu verarbeiten (z.B. mit Hilfe einer Verarbeitungseinheit) und in der Lage eine mit der Nachricht korrespondierende Wirkung einzuleiten (z.B. indem die Nachricht den Eintritt des Senders in den (z.B. äußeren) Empfangsbereich des Empfängers simuliert), so wird der Wirkradius des Fernkommunikationsmittels erheblich vergrößert. Darüber hinaus können Zusatzfunktionen ermöglicht werden, wie z.B. ein Informationsmodus (an z.B. einen anderen Sender, daß eben der Sender 1 den vordefinierten Radius unterschritten hat und damit zu rechnen ist, daß er in Kürze eintrifft, wodurch beispielsweise Vorbereitungen für das Abendessen eingeleitet werden können.

Die Aufgabe wird darüber hinaus auch gelöst durch Gebäude, Schiffe, Flugzeuge, umfassend Wohneinheiten und einen beschriebenen Präsenzmelder für Wohneinheiten.

Die Aufgabe wird darüber hinaus auch gelöst durch ein Verfahren umfassend einen beschriebenen Präsenzmelder für Wohneinheiten, wobei in einem ersten Schritt sich der Sender mit Hilfe seines Fernkommunikationsmittels beim Empfänger anmeldet, wobei der Empfänger mit Hilfe des Speichers diesen Sender identifiziert und wobei in einem weiteren Schritt auf Basis der Identifizierung diejenigen Daten aus dem Speicher abgerufen werden, welche im Speicher für den identifizierten Sender und welche im Speicher für die betreffende Wohneinheit hinterlegt sind und wobei auf Basis dieser Daten der Ist-Zustand von elektrischen Verbrauchern in der Wohneinheit an den durch die Daten abgebildeten Soll-Zustand dieser elektrischen Verbraucher angenähert wird.

Durch den sequentiellen Ablauf von Empfang und Identifikation des Senders einerseits und Anpassen der Umgebung auf Basis der im Speicher hinterlegten Daten anderseits, also dadurch, daß nicht all diese Schritte gleichzeitig ablaufen, kann eine Prüfroutine zwischengeschaltet werden, beispielsweise, daß für den zweiten Schritt in manchen Konstellationen eine eigene Freigabe zu erfolgen hat. Wenn beispielsweise Kinder z.B. nach 22:00 Uhr das Fernsehzimmer betreten, bei welchem Licht und TV-Gerät nur durch Mitführen eines Senders anschaltbar sind und wenn ihnen den Vorgaben gemäß das Anschalten des Fernsehers verwehrt ist, beispielsweise weil für diesen Fall gar keine Daten im Speicher hinterlegt sind, so erlaubt eine solche sequentielle Aktivierung nach einer bereits erfolgten Identifizierung, daß die Eltern eine Anfrage auf z.B. ihren Sender erhalten. Auf Basis dieser Anfrage können sie dann die Entscheidung treffen, den Kindern den Zugang zum Fernsehgerät zu erlauben oder zu verwehren. Dies kann umgesetzt werden, indem auf dem Sender der Eltern eine entsprechende Auswahl (Zustimmen / Verwehren) erscheint. Im Falle / Ablehnung einer Zustimmung der Eltern wird dieses Signal per Fernkommunikationsmittel, wie im Falle von z.B. WLAN an den nächsten Access-Point weitergeleitet, von dort z.B. über das Stromnetz zum Speicher, in welchem dann die zugehörige Handlung aufgerufen und eingeleitet wird, wie z.B. die Freischaltung des Handbetriebs des Fernsehers.

Eine Ausführungsform, wobei bei Annäherung oder bei Eintritt in eine Gebäudeeinheit, wie z.B. einem Gesamtgebäude, eine Gebäudeuntereinheit, wie z.B. eine Etage oder einen Gang, oder das gesamte Treppenhaus die Anpassung des Ist-Zustand von elektrischen Verbrauchern in der Wohneinheit an den durch die Daten abgebildeten Soll-Zustand dieser elektrischen Verbraucher beginnt und in einem weiteren Schritt bei Austritt aus dieser Einheit in einen vordefinierten Zustand versetzt wird bewirkt, daß bei Verlassen nicht der Ruhezustand eingestellt wird, sondern ein vordefinierter Übergangszustand. Dies ist vorteilhaft in Zeiten hektischer Betriebsamkeit, wenn beispielsweise mehrere Personen sich in einem Gebäude befinden und die selben Räume nutzen, damit nicht jeder ein jedes Mal in einen dunklen Raum eintritt und damit nicht jedes Mal die Heizung hoch und wieder runtergefahren wird und sich somit kein stabiler Wert einstellt.

Eine Ausfuhrungsform, wobei der vordefinierte Zustand der Ruhe-Zustand ist, schaltet alle vordefinierten Geräte aus, was hilft, Energiekosten zu sparen.

Die Aufgabe wird weiterhin gelöst durch die Verwendung eines WLAN-fähigen Elektrogeräts als Präsenzmelder für Wohneinheiten wobei der Präsenzmelder für Wohneinheiten insbesondere die zuvor beschriebenen Merkmale umfasst.

Die Aufgabe wird darüber hinaus auch gelöst durch ein Verfahren umfassend einen beschriebenen Präsenzmelder für Wohneinheiten, wobei in einem ersten Schritt sich der Sender mit Hilfe seines Fernkommunikationsmittels beim Empfänger anmeldet, wobei der Empfänger mit Hilfe des Speichers diesen Sender identifiziert und wobei in einem weiteren Schritt auf Basis der Identifizierung diejenigen Daten aus dem Speicher abgerufen werden, welche im Speicher für den identifizierten Sender und welche im Speicher für die betreffende Wohneinheit hinterlegt sind und wobei auf Basis dieser Daten der Ist-Zustand von elektrischen Verbrauchern in der Wohneinheit an den durch die Daten abgebildeten Soll-Zustand dieser elektrischen Verbraucher angenähert wird.

Bei allen Ausgestaltungsformen und Lösengen ist vorteilhaft, wenn die Daten alle in mindestens einem zentralen Speicher vorhanden sind und nicht etwa im Sender selbst. Hierdurch kann bei Verlust oder Beschädigung des Senders dieser leicht ersetzt werden. Damit dient der Sender lediglich dem Anstoß, um im Speicher hinterlegte Vorgänge anzustoßen und ablaufen zu lassen, wobei der Sender gerade nicht mehr durch einen Bediener betätigt werden muß.

Weitere Ausgestaltungsformen ergeben sich aus den Fig. Hierbei zeigten:
- Fig. 1: einen erfindungsgemäße Präsenzmelder für Wohneinheiten und
- Fig. 2: den Einsatz eines erfindungsgemäßen Präsenzmelders für Wohneinheiten als Ortungssystem in einem Raum.

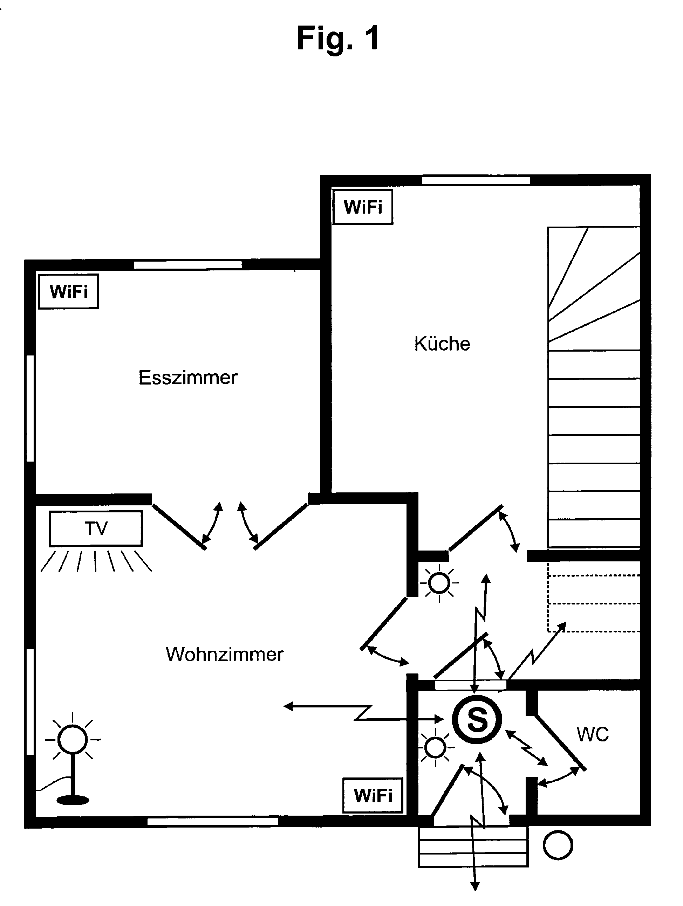

Fig. 1 zeigt einen erfindungsgemäßen Präsenzmelder für Wohneinheiten und einen Sender "S", der sich aus dem Garten kommend gerade im Eingangsbereich des Hauses befindet. Über das Fernkommunikationsmittel WiFi mit seinen im Erdgeschoß verteilten 3 Access-Points wurde dieser Sender als bekannt und vertrauenswürdig identifiziert und daher die elektrisch betätigbare Haustüre geöffnet und das Licht Vorraum angeschalten. Außerdem wird nun die elektrisch betätigbaren WC-Türe und Haustüre geschlossen und die elektrisch betätigbaren Türen und zum Wohnzimmer geöffnet. Im Wohnzimmer wurden der Fernseher und eine Standlampe angeschalten.

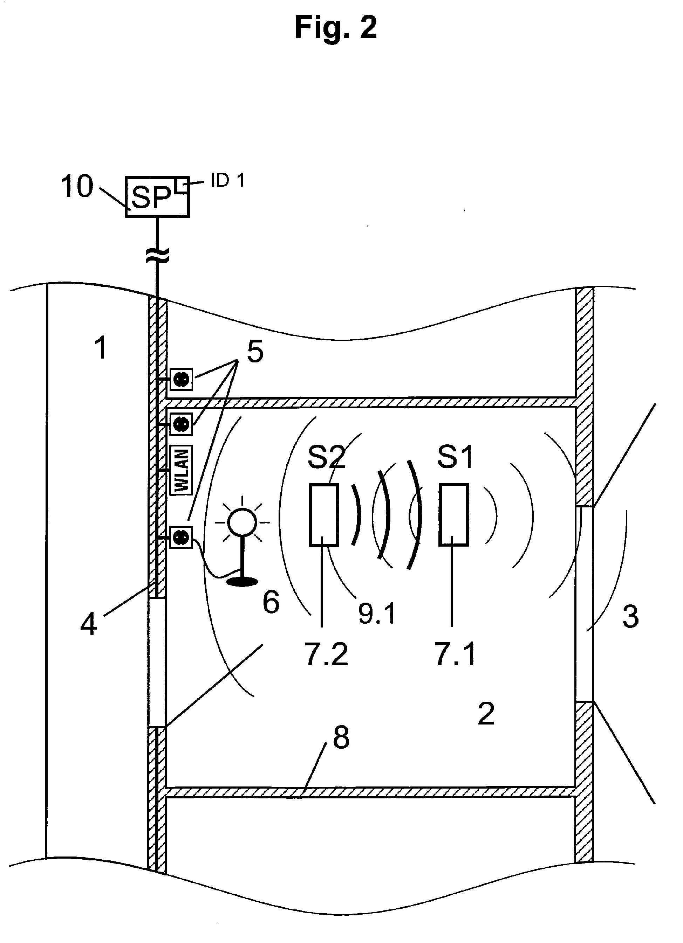

Fig. 2 stellt schematisch die beispielhafte Möglichkeit der erfindungsgemäßen Erkennung eines neuen Senders, z.B. in Gestalt eines Mobiltelephons 7.2 dar.

Im Speicher "SP" 10 ist die ID1 des Senders 7.1 abgelegt, sowie diverse Zustände für die Umgebung des Raum 2, hierunter unter anderem der Zustand, daß die an die Steckdose 5 angeschlossene Lampe 6 zu brennen hat und daß das Fenster 3 zu öffnen ist.

Der Sender 7.1, steht mit dem an die Stromleitung 4 angeschlossenen Empfänger 11 per Fernkommunikationsmittel WiFi in Kontakt. Sender S1 7.1, hat seine ID an den Empfänger 5 per WLAN übertragen. Das WLAN, welches and die Stromleitung angeschlossen ist, leitete diese Daten über das Stromnetz 1 die in der WO 06034866A beschriebenen Weise an den Speicher 10 weiter und übermittelte so die ID des Senders S1 an den Speicher SP 10. Im Speicher SP 10 wurden die für die ID des Senders 7.1 hinterlegten Zustände des Raums 2 aktiviert, die im vorliegenden Fall darin bestehen, daß die Lampe 6 angeschalten wurde, sowie das Fenster 3 geöffnet wurde.

Darüber hinaus befindet sich im selben Raum 2 nun der Sender 7.2., in Gestalt eines zweiten Mobiltelephons. Die ID des zweiten Mobiltelephons ist noch nicht im Speicher 10 abgelegt, weswegen ihm auch keine Raumzustände zugeordnet sind.
Der zweite Sender S2 7.2. tritt nun per Fernkommunikationsmittel (WiFi) in Kontakt mit dem ersten Sender S1 7.1. und überträgt seine ID2 an den Sender S1. Diese ID2 wird vom Sender S1 7.1. angezeigt und zugleich wird eine Auswahlliste bekannter Zustände von Räumen aufgelistet und zur Auswahl angeboten. Angenommen, beim Eigentümer des Senders S1 handelt es sich um einen Handwerker oder den Lieferanten des Heizöls, so wird der Besitzer des Senders S1 die Handwerkeroption auswählen, wodurch der Inhaber des Senders S1 zu den hinterlegten Konditionen, wie z.B. in der Arbeitszeit von 7-16:00 Uhr und zu den hinterlegten Bedingungen, wie z.B. die Unterhaltungsmedien sind abgeschalten und private Bereiche sind elektronisch gesichert, z.B. durch eine partielle Aktivierung der Alarmanlage, Zutritt zum Gebäude erhält, auch wenn der Hausherr selbst nicht im Hause ist.

Durch eine Bestätigung der ID2 durch den Sender S 1 und durch die Verknüpfung mit dem betreffenden Gebäudezustand, wurde die ID2, sowie die ausgewählte Verknüpfung im Speicher 10 hinterlegt. Dem Inhaber des Senders S2 7.2 ist nun im Rahmen der eröffneten und im Speicher 10 hinterlegten Bedingungen der Zutritt zum Gebäude eröffnet.

Fig. 2 zeigt ein z.B. Mobiltelephon 7, welches durch eine Batterie betrieben, oder zum Betrieb an die Stromversorgung angeschlossen werden kann. Darüber hinaus ist es klein und damit leicht verlierbar und es ist mobil und damit in diversen Räumen verwendbar.

Fig. 2 ist weiterhin zu entnehmen, dass im Bereich des Flurs 1 eine Stromleitung 4 verläuft, welche diverse Steckdosen 5, auch des Raums 2, mit Strom versorgt. Der Raum 2 weist darüber hinaus noch ein geöffnetes Fenster 3 auf. Der vorliegende Raum 2 verfügt nicht über einen eigenen Stromkreis, was für elektrische Gebäudeinstallationen, insbesondere für Smart-Home-Systeme mindestens hilfreich, oftmals aber auch Voraussetzung für die Installation eines derartigen Systems ist. Insbesondere im Altbaubestand sind jedoch diese Gegebenheiten nicht immer erfüllt, bzw. ohne Umbau gar nicht erfüllbar. Die elektrische Installation, also die im Gebäude vorhandene Stromkreise sind daher insbesondere im Altbaubestand oft unabhängig von den räumlichen Gegebenheiten vor Ort. Durch die in der in Fig. 2 dargestellte Anordnung kann die Anschlußlogik der anzuschließenden Geräte und die Bildung von Gerätegruppen unabhängig von der physischen Verdrahtung organisieren werden. Es kann so zu sagen ein "virtueller Stromkreis" erstellt werden, in welchem vorliegend die Gerätegruppe des Raums 2 (Lampe 6 und Mobiltelephon 7) in einer Gruppe zusammengefasst sind. Diese Gerätegruppe kann auf die erfindungsgemäße Weise deckungsgleich zur räumlichen Abgrenzung des Raums 2 gestaltet werden, indem ein Ortungssignal 9 Verwendung findet, welches Wände 8 nicht durchdringen kann.

Das erfindungsgemäße System ist ach geeignet, Sender (wie z.B. Mobiltelephone) neu in das System aufzunehmen und verlorene Sender wiederzufinden. Eine weitere Möglichkeit ist, ein weiteres Ortungssignal 9 zu erzeugen, indem z.B. Chips, welche den an den Einrichtungsgegenständen angebracht werden, mit einem Piezo-Kristall auszustatten, wobei das Piezo-Kristall entweder als ein Lautsprecher, oder als ein Mikrophon wirkt. Wenn nun ein neues Gerät, also vorliegend das Mobiltelephon 7 beispielsweise durch Anstecken an eine Steckdose 5 im Raum 2 angeschlossen wird, so wird dieses ein Ortungssinnsignal in Gestalt eines Tons aussenden, welches von dem/den bereits installierten Geräte/n im Raum 2 mit Hilfe dessen Piezo-Elements empfangen wird. Auf diese Weise kann das neue Gerät (Mobiltelephon 7) in dem System angemeldet werden und dem Mobiltelephon wird hierzu als Bestätigung z.B. eine ID zugewiesen, ohne dass ein Bediener diese Zuordnung koordinieren müßte.

Durch den Einsatz von derartigen Chips kann somit bewirkt werden, daß durch eine derartige Erzeugung von beispielsweise Ultraschall entsprechend ausgestattete Elemente untereinander kommunizieren und mit Hilfe einer Identifikationsroutine erkennen, dass sie sich im selben Raum 2 befinden, also dass die Lampe 6 erkennt, dass es sich in ihrer unmittelbaren Nähe ein Mobiltelephon 7 befindet.

Die Begrenzung auf den Raum 2 wird vorteilhafterweise dadurch bewirkt, ein Ortungssignal Verwendung findet, welches Wände 8 nicht durchdringen kann. Vorteilhaft ist es weiterhin, zumindest einen Teil dieses Ortungssignals 9 auch im hörbaren Bereich anzusiedeln, damit der Bediener das sich vollziehende Erkennungs- und Einbindungssignal mitverfolgen kann. Alternativ oder ergänzend wäre auch ein Infrarotsignal möglich.

Vorteilhaft wäre auch eine Quittierung, beispielsweise durch eine charakteristische Signalfolge durch ein charakteristisches akustisches Signal und/oder ein charakteristisches optisches Signal, z.B. ein Blinken der Lampe 6. Eine beispielhafte Einbindungsroutine könnte somit wie folgt gestaltet werden: Anmeldung des einzubindenden Einrichtungsgegenstands durch Abgabe eines Ortungssignals 9, Öffnung der Gruppe von Einrichtungsgegenständen durch die Freigabe der erbetenen Anmeldung, Einbinden des neuen Einrichtungsgegenstands in die Gruppe. Die Anmeldung des neuen Einrichtungsgegenstands durch das Ortungssignal 9 kann dadurch erfolgen, dass die bereits bekannten Elemente der Gruppe auf Empfangsbereitschaft schalten, den Empfang quittieren und das neue Gerät auf diese Weise integrieren. Auf diese Weise ist weder die Führung von Bestandslisten notwendig, in welchen Umtragungen durch einen Bediener eigens vorgenommen werden müssen, die jedoch praktisch nie aktuell waren und es ja auch gar nicht sein können, da der Bediener erst die Meldung einer Umtragung erhalten muß. Die präzise Position des Mobiltelephons 7 kann bis auf wenige Zentimeter genau mit Hilfe von beispielsweise Triangulation, also der Errechnung aus Laufzeitunterschieden erfolgen. Auf diese Weise ist nicht nur der Raum 2 identifizierbar, Weise kann das erfindungsgemäße System als Suchsystem Verwendung finden, indem z.B. von der Lampe 6 und Steckdose 5 je ein Ortungssignal 9 ausgesandt wird, dies durch das noch nicht eingebundene Mobiltelephon reflektiert wird und über die sich hierbei ergebenden Laufzeitunterschiede die genaue Lage des Mobiltelephons 7 ermittelt wird. Auch können auf diese Weise Beamer, Kopierer, Aktenordner etc. nicht nur räumlich, sondern auch innerhalb eines Raums 2 bis auf wenige Zentimeter vor oder nach einer Einbindung in eine Gruppe geortet werden. Diese Daten können dann in Verwaltungssysteme eingespeist werden.

### Bezugszeichenliste:

1. Flur
2. Raum eines Gebäudes
3. Fenster
4. Stromleitung
5. Steckdosen
6. Lampe
7. Mobiltelephon
8. Wand
9. Ortungssignal
10. Speicher
11. Empfänger

## Patentansprüche

1. Präsenzmelder für Wohneinheiten, umfassend mindestens einen mobiler Sender, wobei der Sender Fernkommunikationsmittel umfaßt, mindestens einen Empfänger, wobei der Empfänger in der Wohneinheit verortet ist, und wobei der Empfänger geeignet ist, die Fernkommunikationsmittel des Senders zu empfangen, einen Speicher, in welchem Betriebszustände, von in einer Wohneinheit befindlichen elektrischen Verbrauchern, ablegbar sind, wobei der Sender mit Hilfe seiner Fernkommunikationsmittel mit dem Empfänger automatisiert in Kontakt zu treten in der Lage ist, und diese im Speicher hinterlegten Betriebszustände für die betreffende Wohneinheit automatisiert abzurufen in der Lage ist, wodurch sich durch dieses Abrufen der Zustand von in der Wohneinheit verorteten Stromverbrauchern auf Basis der im Speicher hinterlegten automatisiert Daten ändert.

2. Präsenzmelder nach Anspruch 1, wobei das Fernkommunikationsmittel WLAN ist und / oder wobei der Sender, welcher das Fernkommunikationsmittel umfasst, ein WLANfähiges Gerät ist und / oder wobei das WLANfähige Gerät ist Mobiltelephon und/oder ein Laptop, und/oder ein PDA ist.

3. Präsenzmelder nach einem der zuvor genannten Ansprüche, wobei in dem Speicher für jeden Sender individuelle Daten hinterlegbar sind, welche den Übergangs-Zustand, den Ruhe-Zustand, den Anwesenheits-Zustand der in einer Wohneinheit befindlichen elektrischen Verbraucher repräsentieren.

4. Präsenzmelder nach einem der zuvor genannten Ansprüche, wobei bei Durchwandern der Wohneinheit in der Wohneinheit verortete Stromverbraucher in ihrem Betriebszustand verändert werden.

5. Präsenzmelder nach Anspruch 4, wobei der zu schaltende Stromverbraucher bei Zutritt in die jeweilige Wohneinheit angeschalten und / oder in seinem bereits bestellenden Zustand geändert wird.

6. Präsenzmelder nach Anspruch 4, wobei der zu schaltende Stromverbraucher bei Austritt aus der jeweiligen Wohneinheit ausgeschalten und / oder in seinem bereits bestehenden Zustand geändert wird.

7. Präsenzmelder nach einem der zuvor genannten Ansprüche, wobei jede Gebäudeuntereinheit einen eigenen Empfänger aufweist.

8. Präsenzmelder nach einem der zuvor genannten Ansprüche, wobei die Daten zwischen Speicher und elektrischem Verbraucher über das Hausstromnetz übertragen werden.

9. Präsenzmelder nach einem der zuvor genannten Ansprüche, wobei im Fall, daß mehr als ein Sender im der reichweite des Empfängers ist, bei sich widersprechenden individuellen Zuständen von elektrischen Verbrauchern ein konsensualer Zustand hergestellt wird.

10. Präsenzmelder nach einem der zuvor genannten Ansprüche, wobei mindestens zwei Sender je mindestens einen Ortungssignalgeber umfassen, wobei der Ortungssignalgeber in der Lage ist, mindestens ein Ortungssignal abzugeben und/oder wobei der Sender mindestens einen Ortungssignalempfänger umfasst, wobei der Ortungssignalempfänger in der Lage ist, mindestens eines dieser Ortungssignale entgegenzunehmen, und wobei mindestens einer der Sender im Speicher bekannt ist, und wobei Ortungssignalgeber und Ortungssignalempfänger derart zusammenwirken, daß der im Speicher bekannte Sender einem im Speicher nicht bekannten Sender den Zutritt zum Speicher eröffnet.

11. Präsenzmelder nach einem der zuvor genannten Ansprüche, wobei der Sender ein Navigationssystem umfasst.

12. Gebäude, Schiff, Flugzeug, umfassend eine Vorrichtung nach einem der zuvor genannten Ansprüche.

13. WLAN-fähiges Elektrogerät als Präsenzmelder für Wohneinheiten nach einem der Ansprüche 1 bis 14.

14. WLAN-fähiges Elektrogerät nach Anspruch 13, wobei dessen Einsatz mit Hilfe einer Vorrichtung nach einem der Ansprüche 1 bis 11 erfolgt.

15. Verfahren umfassend einen Präsenzmelder für Wohneinheiten gemäß einem der Ansprüche 1 bis 11, wobei in einem ersten Schritt sich der Sender mit Hilfe seines Fernkommunikationsmittels beim Empfänger anmeldet, wobei der Empfänger mit Hilfe des Speichers diesen Sender identifiziert und wobei in einem weiteren Schritt auf Basis der Identifizierung diejenigen Daten aus dem Speicher abgerufen werden, welche im Speicher für den identifizierten Sender und welche im Speicher für die betreffende Wohneinheit hinterlegt sind und wobei auf Basis dieser Daten der Ist-Zustand von elektrischen Verbrauchern in der Wohneinheit an den durch die Daten abgebildeten Soll-Zustand dieser elektrischen Verbraucher angenähert wird.
